# FASCICULE DE BREVET EUROPEEN

(11) **EP 3 983 669 B1**
(45) Date de publication et mention de la délivrance du brevet: **12.07.2023**
(21) Numéro de dépôt: 20732215.7
(22) Date de dépôt: 12.06.2020
(51) Int. Cl.: F03D 3/06

(54) **ÉOLIENNE ET INSTALLATION DE CONVERSION D'ÉNERGIE COMPRENANT UNE TELLE ÉOLIENNE**
WINDTURBINE UND ENERGIEUMWANDLUNGSANLAGE MIT EINER SOLCHEN WINDENERGIEANLAGE
WIND TURBINE AND ENERGY CONVERSION FACILITY COMPRISING SUCH A WIND TURBINE

(30) Priorité: 13.06.2019 FR 1906308
(43) Date de publication de la demande: 20.04.2022
(73) Titulaire: Alizen Energie Durable, 42800 Sainte-Croix-en-Jarez (FR)
(72) Inventeur: CHAVEROT, Pierre, 42800 Sainte Croix en Jarez (FR)
(74) Mandataire: Lavoix
(86) Numéro de dépôt international: PCT/EP2020/066257
(87) Numéro de publication internationale: WO 2020/249709

(56) Documents cités:
- EP-A1- 2 775 140
- US-A- 372 148
- US-A1- 2011 156 392
- US-A1- 2012 306 205
- US-A1- 2015 211 482

## Description

La présente invention concerne une éolienne, ainsi qu'une installation de conversion d'énergie comprenant une telle éolienne.

Une éolienne est un appareil transformant la force motrice d'un flux d'air incident en un mouvement de rotation, grâce à un rotor monté sur un arbre et comprenant des pales ou des aubes. L'arbre entraine un générateur. Un générateur de type commun est un générateur électrique, qui produit de l'électricité. Il est aussi connu de directement relier l'arbre d'une éolienne à une machinerie mécanique, notamment une pompe. Autrement dit, une éolienne transforme la force motrice d'un flux d'air incident en énergie exploitable, notamment électrique ou mécanique.

L'invention s'intéresse plus particulièrement aux éoliennes dont le rotor est monté sur un axe dit vertical, moins consommatrices d'espace que les éoliennes à hélices traditionnelles, qui sont montées sur un axe horizontal au bout d'un mât vertical. Des exemples de telles éoliennes à axe vertical sont les éoliennes dites « Savonius », ou bien les éoliennes de type « Darrieus ». Pour qu'une éolienne puisse produire de l'électricité par vent faible, ses aubes doivent présenter une surface efficace importante. Cependant en cas de vent fort, les éoliennes doivent être régulées pour éviter que la vitesse de rotation trop importante du rotor n'endommage le mécanisme.

Le document US-A-4630996 présente une structure d'éolienne où le rotor de type Savonius est monté sur l'extrémité haute d'un arbre, un contrepoids étant fixé à l'extrémité basse de l'arbre. En cas de vent fort l'arbre bascule autour d'un axe horizontal, ce qui réduit la surface efficace du rotor de l'éolienne et réduit la vitesse du rotor. Une telle structure de l'éolienne impose à l'arbre des efforts de flexion élevés. En outre, comme l'arbre peut basculer dans toutes les directions, un espace important est encore nécessaire tout autour de l'éolienne, ce qui limite l'utilisation d'une telle éolienne à des systèmes de petite taille, par exemple installées sur le toit de maisons individuelles.

Le document EP2775140A1 divulgue une éolienne offshore pivotant autour d'un axe horizontal et équipée d'un ballast faisant office de contrepoids permettant de stabiliser ladite éolienne.

C'est à ces problèmes qu'entend remédier plus particulièrement l'invention, er proposant une éolienne robuste, auto-régulée et compacte au regard de la surface efficace du rotor.

À cet effet, l'invention concerne une éolienne, posée sur le sol, qui comprend un arbre, un rotor et un contrepoids. L'arbre définit un axe de rotation et présente une partie haute avec une extrémité haute et une partie basse avec une extrémité basse. Le rotor comprend des aubes, est monté sur la partie haute de l'arbre et définit un centre de poussée. Le contrepoids est monté sur la partie basse de l'arbre. L'éolienne comprend, en outre, un bâti monté sur un socle, le bâti définissant un axe de bascule horizontal.

Selon l'invention, l'éolienne inclut une cage qui définit un volume interne traversé par un premier axe et un deuxième axe orthogonal au premier axe. L'arbre comprend, en outre, un palier haut et un palier bas qui sont situés respectivement à l'extrémité haute et à l'extrémité basse de l'arbre, l'arbre étant liée à la cage par l'intermédiaire des paliers haut et bas et étant mobile en rotation par rapport à la cage autour d'un axe de rotation confondu avec le premier axe de la cage. L'arbre, le rotor et le contrepoids sont essentiellement contenus dans le volume interne, le sous ensemble formé par l'arbre, le rotor, le contrepoids et la cage définissant un centre de gravité. Le deuxième axe de la cage est confondu avec l'axe de bascule, le point d'intersection entre l'axe de bascule et l'axe de rotation de l'arbre étant situé entre le centre de poussée et le centre de gravité, la cage étant mobile en rotation par rapport au bâti autour de l'axe de bascule.

Grâce à l'invention, le rotor de l'éolienne bascule en fonction de la vitesse du flux d'air incident sans nécessiter plus d'espace, et la vitesse du rotor est régulée de façon passive. L'arbre, soutenu au moins à ses deux extrémités, est moins soumis aux sollicitations en flexion. Enfin, l'éolienne ne demande pas un espace réservé tout autour.

Selon des aspects avantageux mais non obligatoires de l'invention, une telle éolienne peut incorporer une ou plusieurs des caractéristiques suivantes, prises selon toute combinaison techniquement admissible :
- la forme de la cage présente une symétrie de révolution autour du premier axe, de préférence ovoïde, de préférence encore sphérique.
- La cage présente une structure indéformable en treillis métalliques.
- L'éolienne comprend un socle sur lequel est monté le bâti, le socle étant mobile en rotation par rapport au sol autour d'un axe d'orientation vertical et définissant un côté frontal et un côté arrière, alors que l'éolienne comprend des organes d'orientation aptes à orienter la direction frontale du socle suivant les variations de direction d'un flux d'air incident.
- Les organes d'orientation comprennent au moins une empenne, alors qu'au moins un des éléments choisis parmi le socle et le bâti inclut l'empenne, l'empenne étant située du côté arrière du socle et ayant un effet girouette.
- L'éolienne comprend, en outre, des amortisseurs angulaires, qui sont liés à l'axe de bascule et sont prévus pour amortir les oscillations d'un mouvement de bascule de la cage autour de l'axe de bascule.
- La cage comporte, en outre, un cache, qui protège d'un flux d'air incident certaines des aubes, à savoir celles dont le déplacement inclut une composante opposée à la direction du flux d'air incident.
- Le cache comprend des déflecteurs de réorientation du flux d'air incident, qui sont aptes à réorienter la direction du flux d'air incident vers des faces concaves des aubes, alors que la direction du flux d'air réorienté définit un angle de soufflage par rapport à la trajectoire des aubes, l'angle de soufflage étant inférieur ou égal à 30°, de préférence inférieur à 20°, de préférence encore inférieur à 10°.
- Les déflecteurs sont répartis régulièrement à la périphérie du cache et présentent des profils progressifs suivant leur position sur le cache.

L'invention concerne également une installation de conversion de l'énergie du vent en énergie électrique on mécanique, comprenant un poste de traitement, des conducteurs et une éolienne telle que mentionnée ci-dessus, dans laquelle le contrepoids inclut un générateur, qui est entraîné par l'arbre et génère de l'énergie, alors que les conducteurs relient le générateur au poste de traitement.

Cette installation induit les mêmes avantages que ceux mentionnés ci-dessus au sujet de l'éolienne de l'invention.

L'invention sera mieux comprise et d'autres avantages de celle-ci apparaitront plus clairement à la lumière de la description qui va suivre, de trois modes de réalisation d'une éolienne et d'une installation comprenant une éolienne, conformes à son principe, donnée uniquement à titre d'exemple et faite en référence aux dessins, dans lesquels :
[Fig 1] la figure 1 est une vue de dessus en perspective d'une installation de transformation de l"énergie du vent comprenant une éolienne conforme à un premier mode de réalisation de l'invention et représentée dans une première position ;
[Fig 2] la figure 2 est une vue en perspective montrant certains éléments de l'éolienne de la figure 1 ;
[Fig 3] la figure 3 est une vue de côté de l'éolienne de la figure 1 représentée dans une deuxième position, certains éléments ayant été omis pour plus de clarté ;
[Fig 4] la figure 4 est une vue de dessus en perspective d'une éolienne conforme à un deuxième mode de réalisation de l'invention ;
[Fig 5] la figure 5 est une vue en perspective d'une section partielle de certains éléments d'une éolienne conforme à un troisième mode de réalisation de l'invention ;
[Fig 6] la figure 6 est une vue en perspective d'un cache de l'éolienne de la figure 5, représenté en entier et observé suivant la flèche F6 de la figure 5 ;
[Fig 7] la figure 7 est une vue en perspective du cache de la figure 6, observé suivant la flèche F7 de la figure 5, et
[Fig 8] La figure 8 est une vue en perspective du cache des figures 6 et 7, observé suivant la flèche F8 de la figure 5.

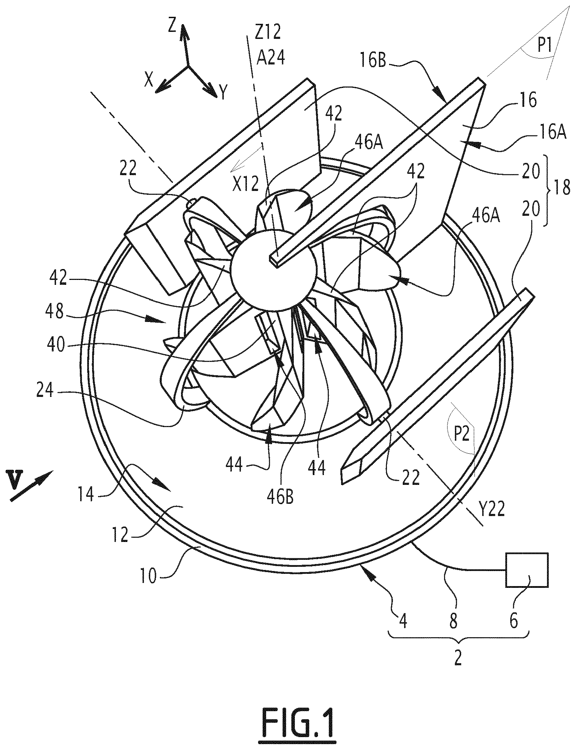

Sur la figure 1 est représentée une installation 2 de transformation de l'énergie du vent en énergie électrique, qui comprend une éolienne 4, un poste de traitement 6 de l'électricité et un câble 8, qui relie l'éolienne 4 au poste 6 de traitement.

L'éolienne 4 est exposée aux vents et le flux d'air incident est matérialisé sur les figures par une flèche notée V.

L'éolienne 4 transforme la force motrice du flux d'air incident V en énergie électrique. La force motrice du flux d'air incident V est aussi appelée « énergie du vent ». Le câble 8 peut contenir un ou plusieurs éléments conducteurs isolés entre eux, qui transmettent l'énergie électrique produite par l'éolienne 4 au poste de traitement 6.

Le poste de traitement 6 inclut un ou plusieurs équipements de conditionnement de l'énergie électrique produite par l'éolienne 4, notamment en termes de fréquence, de voltage et d'ampérage, le fonctionnement du poste 6 de traitement n'étant pas détaillé ici plus avant. L'implantation du poste 6, du câble 8 et de l'éolienne 4 représentée en figure 1 n'est pas limitative.

L'éolienne 4 comprend des fondations 10 et un socle 12. Les fondations 10 sont posées fixement sur le sol du lieu d'installation de l'éolienne 4, avantageusement de façon horizontale. Les fondations 10 sont par exemple réalisées en béton.

Le socle 12 est mobile en rotation par rapport aux fondations 10 autour d'un axe Z12, qui est parallèle à la verticale du lieu. Le socle 12 est donc mobile en rotation par rapport au sol.

Par commodité, on définit un repère orthonormé direct X, Y et Z lié au socle 12 de l'éolienne 4. L'axe Z est la verticale du lieu, l'axe X est l'axe longitudinal et l'axe Y est l'axe transversal.

Par commodité, on définit un plan longitudinal P1 comme étant le plan orthogonal à l'axe Y et contenant l'axe Z12, ainsi qu'un plan transversal P2 comme étant orthogonal à l'axe X et contenant l'axe Z12.

La liaison entre le socle 12 et les fondations 10 peut être réalisée au moyen de roulements ou de paliers, non représentés. D'autres moyens de liaison sont envisageables.

De façon non limitative, le socle 12 comprend une structure métallique, le socle 12 pouvant être partiellement évidé. En variante le socle peut être réalisé en matériau composite ou en bois.

Le socle 12 présente une surface supérieure 14, qui est horizontale et orientée vers le haut, c'est-à-dire à l'opposé des fondations 10. Avantageusement la surface supérieure 14 est circulaire et centrée sur l'axe Z12. Le plan transversal P2 divise le socle 12 en un côté frontal et un côté arrière. On définit une orientation X12 du socle 12 comme étant la direction parallèle à l'axe X et orientée du côté avant du socle 12.

L'éolienne 4 comprend, en outre, une empenne principale 16. L'empenne principale 16 est ici une paroi qui est liée au socle 12 et qui s'étend dans le plan longitudinal P1, l'empenne principale 16 étant essentiellement située du côté arrière du socle 12. L'empenne principale 16 présente une première face 16A et une deuxième face 16B opposée à la première face 16A. La première face 16A et la deuxième face 16B sont parallèles entre elles. En variante non représentée, la première face 16A et la deuxième face 16B sont divergentes vers l'arrière de l'éolienne 4, l'empenne principale 16 présentant alors une meilleure tenue mécanique.

Lorsque l'orientation X12 du socle 12 n'est pas alignée avec la direction du flux d'air incident V, une des faces parmi la première face 16A et la deuxième face 16B reçoit préférentiellement le flux d'air incident V, générant une force aérodynamique résultant en un moment de rotation de l'empenne principale 16 autour de l'axe Z12. Ce moment de rotation tend à aligner l'axe d'orientation X12 sur la direction du flux d'air incident V, autrement dit l'empenne principale 16 montée sur le socle 12 agit comme une girouette, qui oriente le socle 12 en fonction de la direction du flux d'air incident V. L'empenne principale 16 agit comme une girouette de façon passive, c'est-à-dire sans aucun apport d'énergie externe. L'empenne principale 16 est un exemple de réalisation, non limitatif, d'organes d'orientation destinés à ajuster l'orientation du socle 12 par rapport au sol en fonction de l'orientation du flux d'air incident V.

L'éolienne 4 comporte, en outre, un bâti 18. Le bâti 18 est ici réalisé en deux parties 18A et 18B montées sur le socle 12 symétriquement par rapport au plan longitudinal P1. Chacune des deux parties 18A et 18B du bâti 18 s'étend vers le haut, à partir de la surface supérieure 14 dans un plan parallèle au plan longitudinal P1.

Chacune des deux parties 18A et 18B du bâti 18 comprend un palier 22. Les deux paliers 22 sont disposés en regard l'un de l'autre par rapport au plan P1 et définissent un axe de bascule Y22. L'axe de bascule Y22 est parallèle à l'axe transversal Y et perpendiculaire à l'axe Z12.

Avantageusement, chacune des deux parties 18A et 18B du bâti 18 forme une empenne secondaire 20. Les empennes secondaires 20 coopèrent avec l'empenne principale 16 et contribuent à l'effet girouette et à l'orientation du socle 12 en fonction de la direction du flux d'air incident V.

Les formes, tailles et implantions de l'empenne principale 16 et des empennes secondaires 20 représentées sur les figures ne sont pas des limitatives, et peuvent être ajustées en fonction des considérations pratiques ou esthétiques.

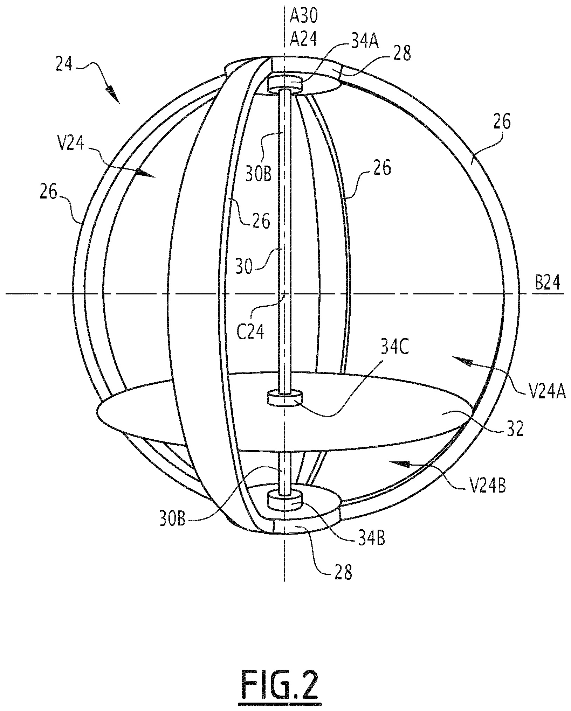

L'éolienne 4 comprend, en outre, une cage 24, plus particulièrement visible en figure 2. La cage 24 définit un volume interne V24, ainsi qu'un premier axe A24 et un deuxième axe B24, le premier axe A24 et le deuxième axe B24 traversant le volume interne V24 et sont orthogonaux l'un à l'autre. Dans l'exemple des figures la cage 24 présente une forme sphérique avec un centre C24, où se coupent le premier axe A24 et le deuxième axe B24.

La cage 24 comprend ici quatre montants 26 et deux brides 28. Les deux brides 28 présentent chacune une forme identique l'une à l'autre et sont disposées en regard l'une de l'autre sur l'axe A24. Les quatre montants 26 présentent chacun une forme identique l'une à l'autre et sont disposés régulièrement, à 90°, autour du premier axe A24, chaque montant 26 reliant l'une à l'autre les deux brides 28. Les montants 26 sont donc, deux à deux, situés en regards les uns des autres. Le deuxième axe B24 traverse deux des montants 26. La cage 24 est montée pivotante sur les paliers 22 du bâti 18, le deuxième axe B24 étant confondu avec l'axe de bascule Y22. Autrement dit, la cage 24 est apte à basculer par rapport au bâti 18 autour de l'axe de bascule Y22. On appelle « mouvement de bascule » le mouvement de rotation de la cage 24 par rapport au bâti 18 autour de l'axe de bascule Y22.

Avantageusement, la forme de la cage 24 présente une symétrie de révolution autour du premier axe A24. Avantageusement encore, la forme de la cage 24 est ovoïde, ce qui permet d'éviter les concentrations de contrainte typiques des structures présentant des angles. De façon encore plus avantageuse, la forme de la cage 24 est sphérique, cette forme facilitant la construction de la structure de la cage 24. Dans l'exemple de réalisation, la cage 24 et plus particulièrement les montants 26, sont réalisés en treillis métalliques. Cet exemple, non limitatif, permet de réaliser une structure indéformable, légère et résistante.

Dans l'exemple des figures, la cage 24 présente une structure pleine. En variante non représentée, la cage 24 peut présenter une structure profilée, réalisée par exemple en matériaux composites, ou une structure ajourée, réalisée par exemple en treillis métalliques.

L'éolienne 4 comprend, en outre, un arbre 30 et une cloison 32. L'arbre 30, qui présente un axe longitudinal A30, est monté rotatif sur la cage 24, l'axe A30 étant aligné avec le premier axe A24 de la cage 24.

On note I4 le point d'intersection des axes A30 et Y22.Dans l'exemple, les points I4 et C24 sont confondus.

La cloison 32 relie les montants 26 au sein du volume interne V24 et est orthogonale au premier axe A24. La cloison 32 partage le volume interne V24 en un volume haut V24A et un volume bas V24B, plus petit que le volume haut V24A. Le volume bas V24B est plus proche du socle 12 que le volume haut V24A dans la représentation de la figure 1. La portion de l'arbre 30 contenu dans le volume haut V24A est notée partie haute 30A, tandis que la portion de l'arbre 30 contenu dans le volume bas V24B est notée partie basse 30B. L'arbre 30 comprend, en outre, un palier haut 34A, situé à l'extrémité de la partie haute 30A, un palier bas 34B, situé à l'extrémité de la partie basse 30B, et un palier 34C situé sur la cloison 32. Le palier haut 34A et le palier bas 34B sont montés sur les brides 28 de la cage 24 et assurent le positionnement et la rotation de l'arbre 30 par rapport à la cage 24.

Dans l'exemple des figures, la cloison 32 est représentée par une surface pleine. En variante non représentée, la cloison 32 présente une structure ajourée. Selon une autre variante encore, la cloison 32 à la forme d'une croix, qui relie les quatre montants 26 au palier 34C.

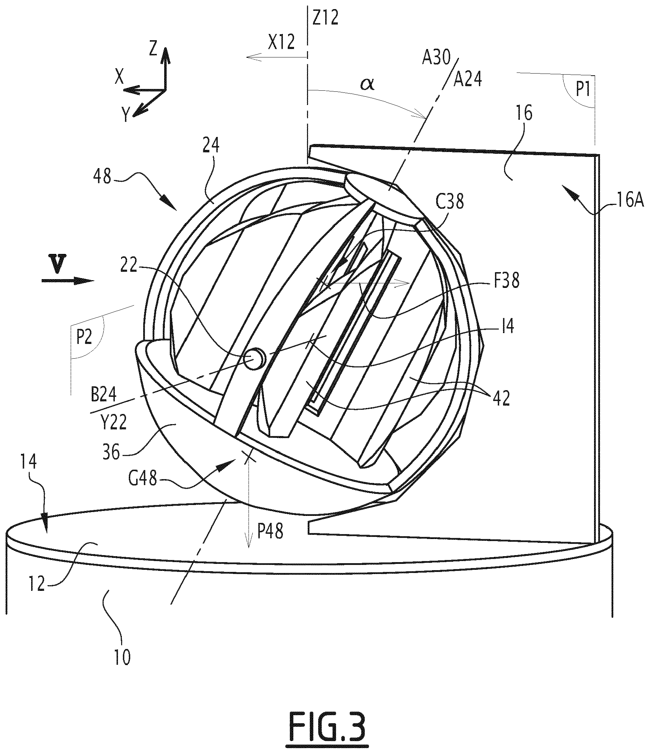

L'éolienne 4 comporte, en outre, un contrepoids 36, visible sur la figure 3. Le contrepoids est essentiellement contenu dans le volume bas V24B de la cage 24, et comprend, à titre d'exemple non limitatif, des éléments de masse volumique élevée tels que des blocs de béton ou du métal.

La répartition des masses dans le contrepoids 36 est conçue pour équilibrer la cage 24 en appui sur les paliers 22. Avantageusement, le contrepoids 36 comprend un alternateur, non représenté, dont le rotor est entrainé par l'arbre et le stator est lié à la cage 24, l'alternateur transformant le mouvement de rotation de l'arbre 24 en énergie électrique.

Avantageusement, le volume bas V24B est capoté, notamment pour réduire la prise au vent du contrepoids 36.

L'éolienne 4 comprend, en outre, un rotor 38, qui est monté sur l'arbre 30. Autrement dit, le rotor 38 est mobile en rotation par rapport à la cage 24 autour d'un axe de rotation confondu avec le premier axe A24. À titre d'exemple non limitatif, le rotor 38 est réalisé en matériaux composites. Avantageusement, le rotor 38 est équilibré, c'est-à-dire que le rotor 38 présente un axe principal d'inertie confondu avec le premier axe A24.

Le rotor 38 occupe l'essentiel du volume haut V24A de la cage 24, c'est-à-dire que le rotor 38, qui tourne au sein du volume haut V24A autour de l'arbre 30, est le plus grand possible en regard du volume disponible de la cage 24. D'autre part, le rotor 38 reste essentiellement contenu dans le volume haut V24A.

Considérés ensembles, le rotor 38, l'arbre 30 et le contrepoids 36 sont essentiellement contenus dans le volume interne V24.

Le rotor 38 comprend un moyeu 40 aligné sur l'arbre et, dans l'exemple présenté sur les figures, six aubes 42. Les aubes 42 s'étendent radialement au moyeu 40 et présentent chacune une forme identique l'une à l'autre. Chaque aube 42 présente une ouverture 44 et un profil en aile avec une face concave 46A et une face convexe 46B. Les ouvertures 44 présentent chacune une forme allongée, sont ménagés dans l'épaisseur des aubes 42 au voisinage du moyeu 40, avec leur plus grande dimension parallèle au premier axe A24.

Pour chaque aube 42, l'écoulement différentiel du flux d'air incident V sur la face concave 46A et sur la face convexe 46B génère sur l'aube 42 considérée, grâce au profil en aile de l'aube 42, une poussée dont la composante orthonormale à l'axe A24 crée un moment de rotation de l'aube 42 considérée autour de l'axe A24 et dont la composante radiale à l'axe A24 est reprise par les paliers 34A et 34B.

Les aubes 42 sont orientés dans le même sens, c'est à dire que pour deux aubes 42 consécutives, les faces concaves 46A des deux aubes 42 ne sont pas orientées l'une vers l'autre et, symétriquement, les deux faces convexes 46B ne sont pas orientées l'une vers l'autre.

De façon schématique, la force résultante subie par une aube 42 dont la face concave 46A est orientée face au flux d'air incident V est supérieure à la force résultante subie par une aube 42 dont la face convexe 46B est orientée face au flux d'air incident V.

En résultat, les aubes 42 étant toutes orientées dans le même sens autour du premier axe A24, la somme des forces résultantes subies par chaque aube 42 est une force résultante F38 subie par le rotor 38, représentée par une flèche sur la figure 3. La force résultante F38 est parallèle à et orientée dans le même sens que le flux d'air incident V. La force résultante F38 est appliquée sur un centre de poussée C38, représenté par une croix sur les figures. La force résultante F38 présente une composante orhonormale à l'axe A24, qui crée un moment de rotation du rotor 38 autour de l'axe A24.

Dans l'exemple des figures, la cage 24 présente la forme d'une sphère, et le deuxième axe B24 est un diamètre horizontal de la cage 24. Si le rotor 38 occupait tout le volume interne V24, le rotor 38 présenterait une symétrie par rapport au plan passant par le deuxième axe B24 et orthogonal au premier axe A24, le centre de poussée C38 serait alors porté par le deuxième axe B24. Ici, le rotor 38 occupe essentiellement le volume haut V24A. Autrement dit, la partie du volume bas V24B « manque » au rotor 38. En résultat, le centre de poussée C38 est situé au-dessus du deuxième axe B24, c'est-à-dire que le centre de poussée C38 est plus éloigné du socle 12 que le deuxième axe B24. Le deuxième axe B24 étant confondu avec l'axe de bascule Y22, le centre de poussée C38 est situé au-dessus de l'axe de bascule Y22.

On définit un sous-ensemble basculant 48 comme étant l'ensemble des éléments basculant avec la cage 24 autour de l'axe de bascule Y22, incluant en particulier la cage 24, l'arbre 30, le rotor 38, le contrepoids 36, ainsi que toutes les autres pièces à rattacher à ces éléments, tel que le palier haut 34A, le palier bas 34B, la cloison 32 et le palier intermédiaire 34C. Chacun des éléments du sous-ensemble basculant 48 a une masse propre et présente un poids. On définit le poids résultant P48 du sous-ensemble basculant 48 comme la somme des poids de ses éléments constitutifs, le poids résultant P48 étant représenté par une flèche sur les figures. Le poids résultant P48 et est appliqué au centre de gravité G48 du sous ensemble 48, représenté par une croix sur la figure 3. Le poids d'un objet est par définition une force verticale et orientée vers le bas.

Avantageusement, la répartition des masses dans le contrepoids 36 équilibre le sous-ensemble basculant 48 autour du premier axe A24, c'est-à-dire que le centre de gravité G48 est situé sur l'axe A24. Le rotor 38 est avantageusement réalisé en une structure légère, présentant une inertie réduite et donc apte à être entrainé en rotation même lorsque le flux d'air incident V présente une vitesse faible. Le contrepoids 36 est, quant à lui, réalisé en un ou plusieurs matériaux plus denses que le rotor 38, notamment dans le cas où il intègre un alternateur, comme envisagé ci-dessus. En résultat, le centre de gravité G48 est situé au-dessous du deuxième axe B24, c'est-à-dire entre le deuxième axe B24 et le socle 12. Le deuxième axe B24 étant confondu avec l'axe de bascule Y22, l'axe de bascule Y22 est situé entre le centre de poussée C38 et le centre de gravité G38. En particulier, le point d'intersection I4 est situé le long des axes A30 et A24 entre le centre de poussée C38 et le centre de gravité G38.

Sur la figure 3, le bâti 18 n'est pas représenté pour faciliter la lecture du dessin. La force résultante F38, d'origine aérodynamique, est fonction de la vitesse du flux d'air incident V. Lorsque la vitesse du flux d'air incident V est nulle, la force résultante F38 est nulle, et le sous ensemble basculant 48 n'est soumis qu'à son propre poids P48. La cage 24 étant apte à basculer par rapport au bâti 18 autour de l'axe de bascule Y22, le centre de gravité G48 se retrouve situé dans le plan vertical contenant l'axe de bascule Y22. Le premier axe A24 est alors vertical, ce qui correspond à la première position de l'éolienne 4, représentée sur les figures 1 et 2.

Lorsque la vitesse du flux d'air incident V augmente, l'empenne principale 16 et les empennes secondaires 20 orientent le socle 12 face au flux d'air incident V et la force résultante F38 est non nulle. Sous l'effet combiné de la force résultante F38 et du poids P48 du sous ensemble 48, la cage 24 bascule autour de l'axe de bascule Y22 vers l'arrière, ce qui corresponds à la deuxième position de l'éolienne 4 représentée en figure 3.

Le premier axe A24 définit un angle de basculement α par rapport à l'axe Z12. Autrement dit l'angle de basculement α est la mesure, en degrés, du mouvement de bascule de la cage 24 autour de l'axe de bascule Y22. On définit une surface efficace du rotor 38 comme étant la section du rotor visible par un observateur, placé face à l'éolienne 4 et situé sur l'axe X passant par le point d'intersection I4, observant l'éolienne 4 suivant la direction du flux d'air incident V.

Pour une vitesse du flux d'air incident V donnée, lorsque l'angle α est égal à 0°, le rotor 38 présente face au flux d'air incident V une surface efficace maximale, et la force résultante F38 est alors maximale.

Lorsque l'angle α est, hypothétiquement, égal à 90°, le contrepoids 36, logé dans le volume bas V24B éventuellement capoté, masque le rotor 38 du flux d'air incident V, et le flux d'air incident V est parallèle aux face concaves 46A et aux faces convexes 46B des aubes 42. En résultat, la surface efficace du rotor 38 est minimale, voire nulle, et la force résultante F38 est elle aussi minimale, voire nulle.

On comprend ainsi que, à flux incident constant, la force résultante F38 décroît à mesure que l'angle α croît entre 0 et 90°.

De plus, lorsque l'angle de bascule α est égal à 0°, le moment du poids P48 par rapport à l'axe de bascule Y22 est nul, alors que le moment de la force résultante F38 par rapport à l'axe de bascule Y22 est maximal. Lorsque l'angle de bascule α croît entre 0 et 90°, le moment du poids P48 croît, alors que le moment de le force résultante F38 décroît.

On comprend ainsi, que pour une vitesse du flux d'air incident V donnée, la cage 24 bascule d'un angle de bascule α correspondant à une position d'équilibre entre le moment par rapport à l'axe de bascule Y22 du poids P48 et le moment par rapport à l'axe de bascule Y22 de la force résultante F38.

En réalité, la vitesse du flux d'air incident V n'est jamais parfaitement stable. Sous l'effet de variation de la vitesse du flux d'air incident V, par exemple en cas de bourrasque, l'angle de bascule α peut varier de façon transitoire, et le mouvement de bascule de la cage 24 peut présenter des oscillations.

Avantageusement, des amortisseurs angulaires, non représentés, peuvent être placés entre la cage 24 et le bâti 18, sur la liaison de bascule. Les amortisseurs angulaires peuvent être notamment intégrés aux paliers 22.

À titre d'exemple non limitatif, les amortisseurs angulaires peuvent inclure un système hydraulique analogue à un visco-coupleur ou à un système intégrant des disques de friction. De tels systèmes ont l'avantage de ne pas nécessiter l'apport d'énergie externe.

Bien entendu, des systèmes actifs d'amortisseurs angulaires, c'est-à-dire reliés à une source d'énergie, peuvent être aussi employés pour amortir les oscillations du mouvement de bascule de la cage 24 autour de l'axe de bascule Y22, voire éventuellement pour verrouiller la cage 24 dans une position donnée, par exemple lors d'une opération de maintenance.

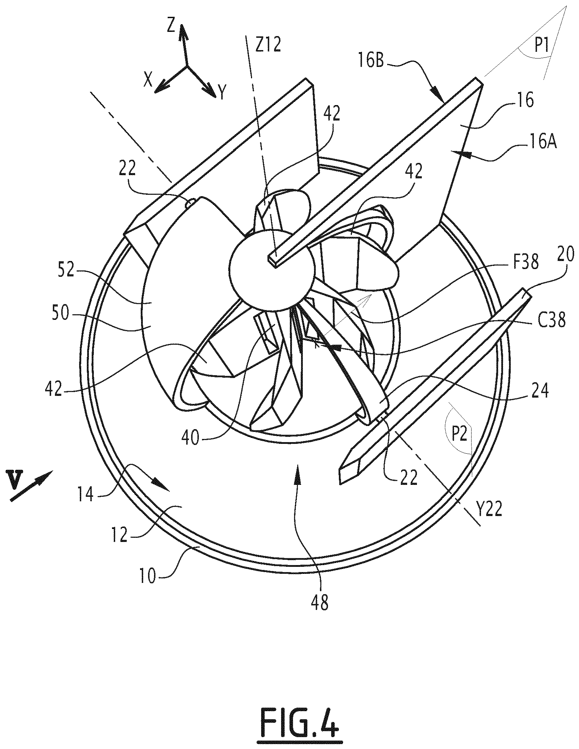

Dans le deuxième mode de réalisation de l'éolienne 4 représenté en figure 4, les éléments analogues à ceux du premier mode de réalisation portent les mêmes références et fonctionnent de la même façon. Dans ce qui suit, on décrit principalement les différences entre le premier et le deuxième mode de réalisation.

L'éolienne 4 comporte également un cache 50 monté fixement sur la cage 24 à la périphérie du volume haut V24A, reliant la cloison 32 à la bride 28 entre deux montants 26 consécutifs. Le cache 50 couvre ici un quart de la surface périphérique du volume haut V24A. Bien entendu, la forme du cache 50 n'est pas limitative.

Le cache 50 comprend une paroi 52 étanche à l'air qui protège du flux d'air incident V les aubes 42 dont la face convexe 46B est orientée face au flux d'air incident V.

En effet, les aubes 42 dont la face convexe 46B est orientée face au flux d'air incident V subissent chacune une force aérodynamique qui s'oppose à la rotation du rotor 38.

À taille égale et en étant soumis au même flux d'air incident V, le rotor de l'éolienne 4 selon le deuxième mode de réalisation peut tourner plus vite que le rotor 38 de l'éolienne 4 selon le premier mode de réalisation, c'est-à-dire que l'éolienne 4 selon le deuxième mode de réalisation peut générer plus d'électricité que l'éolienne 4 selon le premier mode de réalisation.

Sous l'effet du cache 50, l'emplacement du centrée du poussée C38 ainsi que la valeur de la force résultante F38 peuvent changer entre le premier mode réalisation et le deuxième mode réalisation de l'éolienne 4, ce qui peut avoir une influence sur l'orientation de l'éolienne 4 autour de l'axe de rotation Z12. La forme, le nombre et l'implantation de l'empenne principale 16 et des empennes secondaires 20 peuvent alors être adaptés pour compenser l'effet du cache 50 sur l'orientation de l'éolienne 4. En variante non représentée, d'autre éléments aérodynamiques peuvent être fixés au socle 12 ou au bâti 18, pour corriger les effets du cache 50 sur l'orientation de l'éolienne 4.

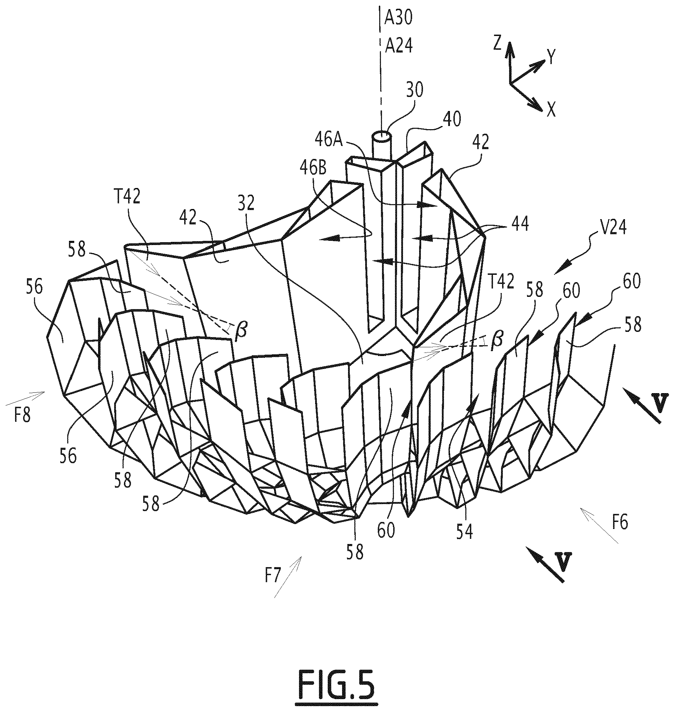

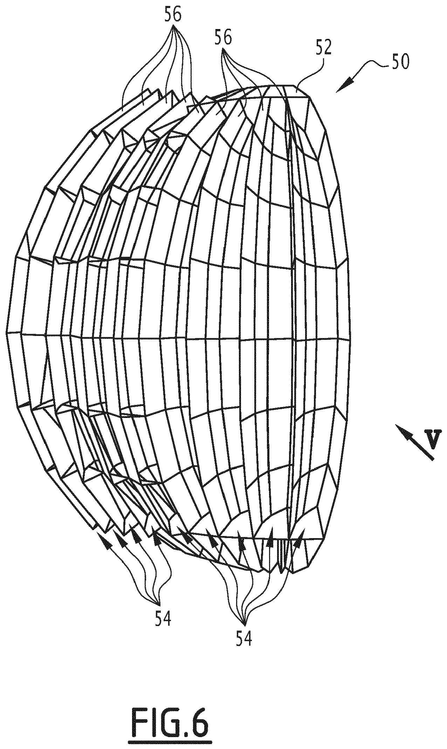

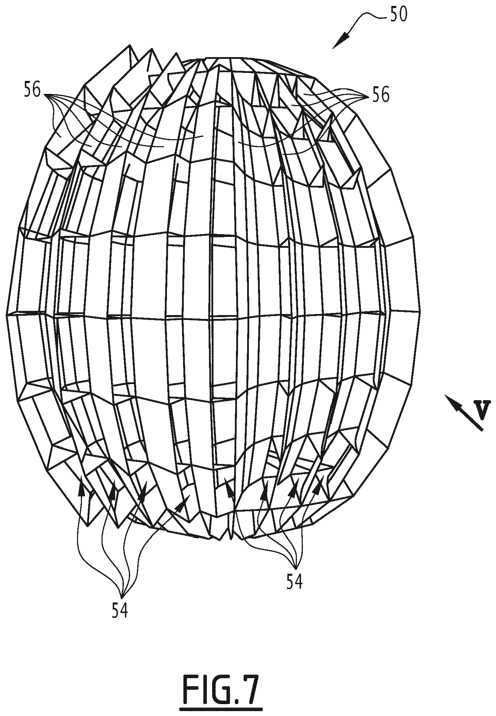

Les figures 5 à 8 représentent un troisième mode de réalisation de l'éolienne 4. Comme précédemment, les éléments analogues à ceux du premier mode et du deuxième mode de réalisation portent les mêmes références et fonctionnent de la même façon.

La figure 5 présente en section partielle le cache 50, deux aubes 42 consécutives et l'arbre 30 de l'éolienne de ce troisième mode de réalisation.

Le cache 50 de ce mode de réalisation comprend des ouïes 54, qui sont ménagées dans la paroi 52 et sont ouvertes sur le volume interne V24. Les ouïes 54 s'étendent radialement au premier axe A24 et sont régulièrement réparties à la périphérie du cache 50.

Le cache 50 comprend aussi des déflecteurs 56 de réorientation du flux d'air incident V. Un déflecteur 56 est situé au voisinage de chacune des ouïes 54. Les déflecteurs 56 sont conçus et construits pour réorienter le flux d'air incident V suivant une direction choisie au sein du volume interne V24.

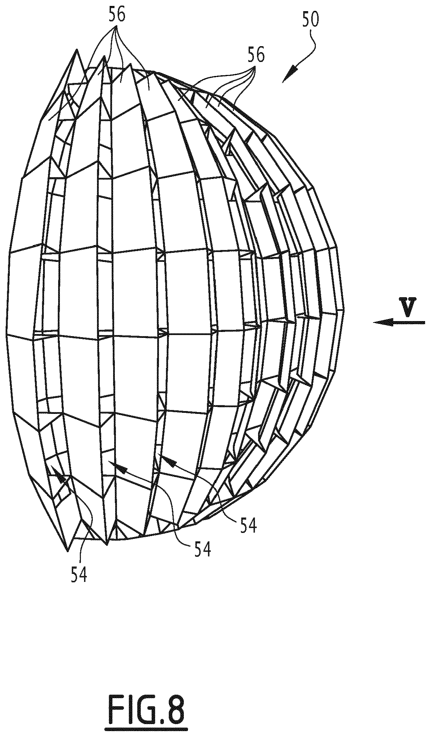

Les aubes 42, mobiles en rotation autour de l'axe de rotation A24, décrivent des trajectoires circulaires centrées sur l'axe de rotation A24. La trajectoire de chaque aube 42 est représentée par une flèche T42 sur la figure 8. Les flèches T42 sont ortho-radiales à l'axe de rotation A24. Chacun des déflecteurs 56 comprend un assemblage de plaques et présente une partie terminale 58, qui comprend un rebord libre 60 orienté vers le volume interne V24. On définit une trace T58, visible sur la figure 5, comme étant la trace de la partie terminale 58 de chaque déflecteur 56 dans le plan orthogonal à l'axe de rotation A24 du rotor 38.

On définit l'angle de soufflage β comme étant l'angle entre la trace T58 de chaque zone terminale 58 et la trajectoire T42 de l'aube 42 lorsque l'aube 42 passe à proximité de cette zone terminale 58.

De façon schématique, le flux d'air incident V est réorienté par les déflecteurs 56. Le flux d'air incident V ne présente qu'une seule direction incidente, alors que le flux d'air réorienté par les déflecteurs 56 présente une direction qui dépend du déflecteur 56 au voisinage duquel le flux d'air se trouve. En illustration, dans le plan de section de la figure 8, la direction du flux d'air réorienté au voisinage de la partie terminale 58 d'un déflecteur 56 est parallèle à la surface de la partie terminale 58 et est située dans le même plan que le plan de section de la figure 8.

En pratique, un angle de soufflage β inférieur à 30° est acceptable. De préférence, un angle de soufflage β inférieur à 20° est souhaitable. De préférence encore, un angle de soufflage β inférieur à 10° donne de bons résultats.

Plus un déflecteur 56 est, par rapport à l'axe A24, angulairement éloigné du plan P1, et plus la réorientation de la direction du flux d'air incident V est importante. Sur la figure 5, l'angle de réorientation du flux d'air incident V du déflecteur 56 le plus proche du plan P1 est sensiblement égal à 90°-β, tandis que pour le déflecteur 56 le plus proche du plan P2, l'angle de réorientation du flux d'air incident est égal à 180°-β.

Dans l'exemple de réalisation, chacun des déflecteurs 56 présente un profil spécifique, qui dépend de la position du déflecteur 56 à la périphérie du cache 50.

Avantageusement, les ouïes 54 et les déflecteurs 56 sont répartis régulièrement à la périphérie du cache 50. Entre deux déflecteurs 56 consécutifs, à mesure que l'on s'éloigne angulairement du plan P1, l'angle de réorientation du flux d'air incident V augmente progressivement, et les déflecteurs 56 présentent des profils dits « progressifs », conçus et construits pour réorienter le flux d'air incident V en fonction de leur position à la périphérie du cache 50.

De façon analogue à l'influence du cache 50 sur l'orientation de l'éolienne selon le deuxième mode de réalisation, les déflecteurs 56 peuvent avoir une influence sur l'orientation du socle 12 autour de l'axe Z12. Les organes d'orientation que sont l'empenne principale 16 et les empennes secondaires 20 peuvent alors être modifiés, notamment en termes de formes, d'implantation ou de nombre, pour corriger l'orientation du socle 12 en fonction de la direction du flux d'air incident V.

En variante, d'autres organes de réorientation du flux d'air incident sont possibles.

En outre, dans tous les modes de réalisation, les empenne principale 16 et secondaires 20 peuvent être complétées, voire remplacées, par un système électromécanique monté entre le socle 12 et les fondations 10 et piloté par une girouette de petite taille disposée sur ou au voisinage de l'éolienne 4, analogue à un régulateur d'allure utilisé dans la navigation à voile.

En variante non représentée, la face supérieure 14 du socle 12 présente une forme annulaire, c'est-à-dire que sa partie central est évidée, les deux parties 18A et 18B du bâti 18 étant fixées sur l'anneau de la face supérieure 14.

L'invention est décrite ci-dessus dans le cas où l'éolienne 4 est couplée à un alternateur, c'est-à-dire à générateur électrique, au sein d'une installation de conversion de l'énergie du vent en énergie électrique, les câbles 8 jouant alors le rôle de conducteurs de transport de l'énergie électrique, de l'alternateur vers les poste de traitement 6. L'invention n'est pas limitée à ce cas et, au lieu d'un générateur électrique, un générateur mécanique, tel qu'une pompe, peut être couplé à l'arbre de sortie 30 de l'éolienne 4. Dans ce cas, l'éolienne 4 fait partie d'une installation de conversion de l'énergie du vent en énergie mécanique, plus particulièrement sous la forme de la pression d'un fluide à la sortie de la pompe. Les tuyaux qui relient la pompe au poste de traitement sont des conducteurs de l'énergie mécanique entre ces deux entités.

Les modes de réalisation et les variantes mentionnés ci-dessus peuvent être combinés entre eux pour générer des nouveaux modes de réalisation de l'invention.

## Revendications

1. Eolienne (4), comprenant un arbre (30), un rotor (38) et un contrepoids (36), l'arbre définissant un axe de rotation (A30) et présentant une partie haute (30A) avec une extrémité haute et une partie basse (30B) avec une extrémité basse, le rotor comprenant des aubes (42) qui sont montées sur la partie haute de l'arbre et définissent un centre de poussée (C38), le contrepoids étant monté sur la partie basse de l'arbre, l'éolienne comprenant, en outre, un bâti (18) monté sur un socle (12), le bâti définissant un axe de bascule (Y22) horizontal, **caractérisée en ce que** l'éolienne inclut une cage (24) définissant un volume interne (V24) traversé par un premier axe (A24) et un deuxième axe (B24) orthogonal au premier axe, **en ce que** l'arbre comprend, en outre, un palier haut (34A) et un palier bas (34B) situés respectivement à l'extrémité haute et à l'extrémité basse de l'arbre, l'arbre étant lié à la cage par l'intermédiaire des paliers haut et bas et étant mobile en rotation par rapport à la cage, l'axe de rotation (A30) de l'arbre étant confondu avec le premier axe (A24) de la cage, **en ce que** l'arbre, le rotor et le contrepoids sont essentiellement contenus dans le volume interne (V24), le sous-ensemble formé de l'arbre, du rotor, du contrepoids et de la cage définissant un centre de gravité (G48), et **en ce que** le deuxième axe (B24) de la cage est confondu avec l'axe de bascule (Y22), un point d'intersection (I4) entre l'axe de bascule (Y22) et l'axe de rotation (A30) de l'arbre étant situé entre le centre de poussée (C38) et le centre de gravité (G48), la cage étant mobile en rotation par rapport au bâti autour de l'axe de bascule.

2. Eolienne (4) selon la revendication précédente, **caractérisée en ce que** la forme de la cage (24) présente une symétrie de révolution autour du premier axe (A24), de préférence ovoïde, de préférence encore sphérique.

3. Eolienne (4) selon l'une quelconque des revendications précédentes, **caractérisée en ce que** la cage (24) présente une structure indéformable en treillis métalliques.

4. Eolienne (24) selon l'une quelconque des revendications précédentes, **caractérisée en ce que** l'éolienne comprend un socle (12) sur lequel est monté le bâti (18), le socle étant mobile en rotation par rapport au sol autour d'un axe d'orientation (Z12) vertical et définissant un côté frontal et un côté arrière et **en ce que** l'éolienne comprend des organes d'orientation (16, 20) aptes à orienter la direction frontale du socle suivant les variations de direction d'un flux d'air incident (V).

5. Eolienne (4) selon la revendication précédente, **caractérisée en ce que** les organes d'orientation (16, 20) comprennent au moins une empenne (16, 20) et **en ce qu'**au moins un des éléments choisis parmi le socle (12) et le bâti (18) inclut l'empenne, l'empenne étant située du côté arrière du socle et ayant un effet girouette.

6. Eolienne (4) selon l'une quelconque des revendications précédentes, **caractérisée en ce que** l'éolienne comprend, en outre, des amortisseurs angulaires, qui sont liés à l'axe de bascule (Y22) et sont prévus pour amortir les oscillations d'un mouvement de bascule de la cage (24) autour de l'axe de bascule (Y22).

7. Eolienne (4) selon l'une quelconque des revendications précédentes, **caractérisée en ce que** la cage (24) comporte, en outre, un cache (50), qui protège d'un flux d'air incident (V) certaines des aubes (42), à savoir celles dont le déplacement inclut une composante opposée à la direction du flux d'air incident.

8. Eolienne (4) selon la revendication précédente, **caractérisée en ce que** le cache (50) comprend des déflecteurs (56) de réorientation du flux d'air incident (V), les déflecteurs de réorientation étant aptes à réorienter la direction du flux d'air incident vers des faces concaves (46A) des aubes (42), **en ce que** la direction du flux d'air réorienté définit un angle de soufflage (β) par rapport à la trajectoire des aubes (42), l'angle de soufflage étant inférieur ou égal à 30°, de préférence inférieur à 20°, de préférence encore inférieur à 10°.

9. Eolienne (4) selon la revendication 8, **caractérisée en ce que** les déflecteurs (56) sont répartis régulièrement à la périphérie du cache (50) et présentent des profils progressifs suivant leur position sur le cache.

10. Installation (2) de conversion de l'énergie du vent en énergie électrique ou mécanique, comprenant un poste (6) de traitement, des conducteurs (8) et une éolienne (4) selon l'une quelconque des revendications précédentes, **caractérisée en ce que** le contrepoids (36) inclut un générateur, qui est entraîné par l'arbre (30) et génère de l'énergie, les conducteurs reliant le générateur au poste de traitement.

## Patentansprüche

1. Windkraftanlage (4), umfassend eine Welle (30), einen Rotor (38) und ein Gegengewicht (36), wobei die Welle eine Drehachse (A30) definiert und einen oberen Abschnitt (30A) mit einem oberen Ende und einen unteren Abschnitt (30B) mit einem unteren Ende aufweist, der Rotor umfassend Schaufeln (42), die an dem oberen Abschnitt der Welle montiert sind und ein Schubzentrum (C38) definieren, wobei das Gegengewicht an dem unteren Abschnitt der Welle montiert ist, die Windkraftanlage ferner umfassend ein Gestell (18), das auf einem Sockel (12) montiert ist, wobei das Gestell eine horizontale Schwenkachse (Y22) definiert, **dadurch gekennzeichnet, dass** die Windkraftanlage einen Käfig (24) beinhaltet, der ein Innenvolumen (V24) definiert, das von einer ersten Achse (A24) und einer zweiten Achse (B24) orthogonal zu der ersten Achse durchquert wird, dass die Welle ferner ein oberes Lager (34A) und ein unteres Lager (34B) umfasst, die sich jeweils an dem oberen Ende und an dem unteren Ende der Welle befinden, wobei die Welle über das obere und das untere Lager mit dem Käfig verbunden ist und in Bezug auf den Käfig drehbeweglich ist, wobei die Drehachse (A30) der Welle mit der ersten Achse (A24) des Käfigs zusammenfällt, dass die Welle, der Rotor und das Gegengewicht im Wesentlichen in dem Innenvolumen (V24) enthalten sind, wobei die aus der Welle, dem Rotor, dem Gegengewicht und dem Käfig gebildete Untergruppe einen Schwerpunkt (G48) definiert, und dass die zweite Achse (B24) des Käfigs mit der Schwenkachse (Y22) zusammenfällt, wobei ein Schnittpunkt (I4) zwischen der Schwenkachse (Y22) und der Drehachse (A30) der Welle zwischen dem Schubzentrum (C38) und dem Schwerpunkt (G48) liegt, wobei der Käfig in Bezug auf das Gestell um die Schwenkachse drehbeweglich ist.

2. Windkraftanlage (4) nach dem vorherigen Anspruch, **dadurch gekennzeichnet, dass** die Form des Käfigs (24) eine Drehsymmetrie, vorzugsweise eiförmig, noch bevorzugter kugelförmig, um die erste Achse (A24) aufweist.

3. Windkraftanlage (4) nach einem der vorherigen Ansprüche, **dadurch gekennzeichnet, dass** der Käfig (24) eine unverformbare Struktur aus Drahtgeflecht aufweist.

4. Windkraftanlage (24) nach einem der vorherigen Ansprüche, **dadurch gekennzeichnet, dass** die Windkraftanlage einen Sockel (12) umfasst, auf dem das Gestell (18) montiert ist, wobei der Sockel in Bezug auf den Boden um eine vertikale Ausrichtungsachse (Z12) drehbeweglich ist und eine Vorderseite und eine Rückseite definiert, und dass die Windkraftanlage Ausrichtungsorgane (16, 20) umfasst, die geeignet sind, um die vordere Richtung des Sockels gemäß den Richtungsänderungen eines einfallenden Luftstroms (V) auszurichten.

5. Windkraftanlage (4) nach dem vorherigen Anspruch, **dadurch gekennzeichnet, dass** die Ausrichtungsorgane (16, 20) mindestens ein Leitwerk (16, 20) umfassen, und dass mindestens eines der Elemente, die ausgewählt sind aus dem Sockel (12) und dem Gestell (18) das Leitwerk beinhaltet, wobei das Leitwerk auf der Rückseite des Sockels angeordnet ist und eine Windfahnenwirkung aufweist.

6. Windkraftanlage (4) nach einem der vorherigen Ansprüche, **dadurch gekennzeichnet, dass** die Windkraftanlage ferner Winkeldämpfer umfasst, die mit der Schwenkachse (Y22) verbunden sind und bereitgestellt sind, um die Schwingungen einer Schwenkbewegung des Käfigs (24) um die Schwenkachse (Y22) zu dämpfen.

7. Windkraftanlage (4) nach einem der vorherigen Ansprüche, **dadurch gekennzeichnet, dass** der Käfig (24) ferner eine Abdeckung (50) umfasst, die gewisse der Schaufeln (42) vor einem einfallenden Luftstrom (V) schützt, nämlich jene, deren Verschiebung eine Komponente entgegengesetzt zu der Richtung des einfallenden Luftstroms beinhaltet.

8. Windkraftanlage (4) nach dem vorherigen Anspruch, **dadurch gekennzeichnet, dass** die Abdeckung (50) Deflektoren (56) zum Ablenken des einfallenden Luftstroms (V) umfasst, wobei die Ablenkungsdeflektoren geeignet sind, um die Richtung des einfallenden Luftstroms in Richtung konkaver Flächen (46A) der Schaufeln (42) abzulenken, dass die Richtung des abgelenkten Luftstroms in Richtung einen Blaswinkel (β) in Bezug auf den Weg der Schaufeln (42) definiert, wobei der Blaswinkel kleiner als oder gleich wie 30°, vorzugsweise kleiner als 20°, weiter vorzugsweise kleiner als 10° ist.

9. Windkraftanlage (4) nach Anspruch 8, **dadurch gekennzeichnet, dass** die Deflektoren (56) gleichmäßig über den Umfang der Abdeckung (50) verteilt sind und je nach ihrer Position auf der Abdeckung progressive Profile aufweisen.

10. Anlage (2) zur Umwandlung von Windenergie in elektrische oder mechanische Energie, umfassend eine Verarbeitungsstation (6), Leiter (8) und eine Windkraftanlage (4) nach einem der vorherigen Ansprüche, **dadurch gekennzeichnet, dass** das Gegengewicht (36) einen Generator beinhaltet, der von der Welle (30) angetrieben wird und Energie erzeugt, wobei die Leiter den Generator mit der Verarbeitungsstation verbinden.

## Claims

1. Wind turbine (4), consisting of a shaft (30), a rotor (38) and a counterweight (36), the shaft defining a rotation axis (A30) and having a high (30A) with a high end and a low (30B) with a low end, the rotor including blades (42) which are mounted on the upper part of the shaft and define a centre of thrust (C38), the counterweight being mounted on the lower part of the shaft, the wind turbine also includes a frame (18) mounted on a pedestal (12), the frame defining a rocking axis (Y22) horizontal, characterised as the wind turbine includes a cage (24) defining an internal volume (V24) traversed by a first axis (A24) and a second axis (B24) orthogonal to the first axis, in that the shaft also includes a high bearing (34A) and a low bearing (34B) located at the upper and lower ends of the shaft, with the shaft attached to the cage through the up and down bearings and moving in rotation from the cage with the shaft's rotation axis (A30) confused with the first axis (A24), the shaft, rotor and counterweight are essentially contained in the internal volume (V24), the shaft, rotor, counterweight and cage sub-assembly defining a centre of gravity (G48), and the second axis (B24) of the cage is confused with the flip axis (Y22), an intersection point (I4) between the flip axis (Y22) and the shaft rotation axis (A30) being between the centre of thrust (C38) and the centre of gravity (G48), with the cage rotating relative to the frame around the flip axis.

2. Wind turbine (4) according to the preceding claim, **characterised in that** the shape of the cage (24) is rotationally symmetrical about the first axis (A24), preferably ovoid, more preferably spherical.

3. A wind turbine (4) according to any of the preceding claims, **characterised in that** the cage (24) has a non-deformable structure made of metal lattice.

4. Wind turbine (24) according to any of the preceding claims, characterised as the wind turbine includes a base (12) on which the frame is mounted (18), the base being mobile in relation to the ground around an orientation axis (Z12) vertical and defining a frontal side and a rear side, and in that the wind turbine has steering gear (16, 20) capable of orienting the frontal direction of the base according to the variations in the direction of an incident air flow (V).

5. Wind turbine (4) according to the previous claim, **characterised in that** the steering bodies (16, 20) include at least one feather (16, 20) and **in that** at least one of the elements chosen from the base (12) and frame (18) includes the case, the case being located on the rear side of the base and having a weathering effect.

6. Wind turbine (4) according to any of the preceding claims, **characterised in that** the wind turbine further comprises angle dampers, which are connected to the tilt axis (Y22) and are provided for damping the oscillations of a tilting movement of the cage (24) about the tilt axis (Y22).

7. Wind turbine (4) according to any of the preceding claims, characterised as the cage (24) also has a cache (50), which protects some of the blades (42) from an incident air flow (V), that is, those whose movement includes a component opposite to the direction of the incident airflow.

8. Wind turbine (4) according to the previous claim, characterised as the cache (50) includes deflectors (56) of incident airflow (V) reorientation, with the reorientation deflectors capable of reorienting the direction of the incident airflow to concave faces (46A) of the blades (42), in that the direction of the reoriented airflow defines a blowing angle (β) with respect to the blade path (42), the blowing angle being less than or equal to 30°, preferably less than 20°, preferably even less than 10°.

9. Wind turbine (4) according to claim 8, **characterised in that** the deflectors (56) are distributed regularly around the periphery of the cover (50) and have progressive profiles according to their position on the cover.

10. Wind energy conversion installation (2) to electrical or mechanical energy, consisting of a processing station (6), conductors (8) and a wind turbine (4) according to any of the previous claims, **characterised in that** the counterweight (36) includes a generator, which is driven by the tree (30) and generates energy, the conductors connecting the generator to the processing station.
